(19) **Europäisches Patentamt**

**European Patent Office**

**Office européen des brevets**

(11) **EP 1 138 604 A1**

(12) **EUROPEAN PATENT APPLICATION**

(43) Date of publication:
**04.10.2001 Bulletin 2001/40**

(51) Int Cl.⁷: **B65D 1/02**, B32B 27/32

(21) Application number: **00201155.9**

(22) Date of filing: **30.03.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **FINA RESEARCH S.A.**<br>**7181 Seneffe (Feluy) (BE)**<br><br>(72) Inventor: **Samarcq, Catherine**<br>**7181 Seneffe (Feluy) (BE)** |

(54) **Glossy plastic containers**

(57)    A plastic container comprising an internal layer including a polyolefin and an external layer including a styrenic component containing from 40 to 85 wt% of styrene based on the weight of the external layer.

EP 1 138 604 A1

**Description**

This invention is related to plastic containers having a glossy outer surface and in particular to the production high gloss bottles, jars, *etc.* formed of polyolefin.

Several methods have been sought to produce high gloss bottles presenting good processability and good mechanical properties but all the blends and techniques used so far present various disadvantages.

High gloss high density polyethylene (HDPE) has been used: it is characterised by a very narrow molecular weight distribution that is typically inferior to 8. The molecular weight distribution can be completely defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution. It is known that a resin of narrow molecular weight distribution will produce plastic containers of very high gloss but simultaneously, that such resin will be very difficult to process and will be characterised by very poor mechanical properties. It has also been observed that said resins have poor mechanical properties, particularly, a very low environmental stress crack resistance (Modern Plastic International, August 1993, p. 45).

The coextrusion of high density polyethylene (HDPE) with a thin external layer of polyamide has been used to produce bottles of very high gloss but that method suffers the major drawback of necessitating an adhesive layer between the HDPE and the polyamide layers.

The coextrusion of high density polyethylene and an external layer of low density polyethylene leads to bottles with a fair gloss. These bottles however have an unpleasant greasy touch and offer a very poor resistance to scratching.

There is thus a need for a method for efficiently producing plastic containers of very high gloss as well as good processability and mechanical properties.

An aim of the present invention is to produce plastic containers that offer simultaneously the desired glossy appearance and a good resistance to scratching.

It is a further aim of the present invention to produce glossy plastic containers to which labels have a good adherence.

It is also an aim of the present invention to obtain glossy plastic containers with good processability and mechanical properties.

The present invention provides plastic containers comprising an internal layer including a polyolefin and an external layer including a styrenic component containing from 40 to 85 wt% of styrene based on the weight of the external layer.

The preferred plastic containers of the present invention are obtained by coextruding a polyolefin as inner layer with a styrenic component as an external layer, said external layer having a styrenic content ranging from 40 to 85 wt%, preferably, from 55 to 80 wt%, and most preferably from 70 to 75 wt%, based on the weight of the external layer.

Preferably, the polyolefin used as the inner layer for the plastic containers of the present invention is high density polyethylene.

The styrenic component may either be a physical blend of polystyrene with an elastomer or a copolymer of styrene and butadiene.

Preferably, the styrenic component is a styrene-butadiene-styrene block copolymer.
Optionally, high impact polystyrene can be physically ???blended with the styrene-butadiene-styrene block copolymer. That addition results in a slightly better gloss, a better resistance to scratch at the expense of mechanical properties.

The external layer of the glossy plastic containers of the present invention preferably has a thickness ranging between 5 and 10 % of the total wall thickness of the plastic containers.

The high density polyethylene used in the present invention must be suitable for blow moulding. The high density polyethylene preferably has a density of from 0.95 to 0.97 g/cm$^3$.

Polyethylene is well known for use in the manufacture of blow moulded articles, for example bottles. It is known in the art that polyethylene resin produced for the manufacture of blow moulded articles must achieve a balance of (a) physical properties of the resin so that the resultant blow moulded article has the required physical characteristics and (b) processing properties of the resin so that the polyethylene melt may readily be processed into the blow moulded article. In order to achieve good processability of the polyethylene resins, it is desired that the flow properties and the shear response of the polyethylene are improved by broadening the molecular weight distribution of the polyethylene. Moreover, the physical properties of the solid resin when employed for blow moulding plastic containers require the resin to have a high density and a high environmental stress cracking resistance (ESCR).

As a general rule, a polyethylene having a higher density tends to have a higher degree of stiffness, thereby making it more suitable for blow moulding into plastic containers. A higher stiffness in the known polyethylene increases the strength of the plastic containers and enables thinner walls to be employed.

However, in general, the environment stress cracking resistance of polyethylene has an inverse relationship with stiffness. In other words, as the stiffness of polyethylene is increased, the environmental stress cracking resistance decreases, and vice versa. This inverse relationship is known in the art as the ESCR-rigidity balance. It is required, for any given plastic container grade polyethylene, to achieve a compromise between the environmental stress cracking resistance of the polyethylene and the rigidity of the polyethylene employed in the blown plastic container.

A number of different catalyst systems have been disclosed for the manufacture of polyethylene, in particular high density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced. It is known to employ a chromium-based catalyst (*i.e.* a catalyst known in the art as a "Phillips catalyst)". Such a chromium-based catalyst enables the production of polyethylene having desirable physical and rheological properties.

It is known in the art to use chromium-based catalysts to polymerise HDPE and in particular to produce high density polyethylene having high resistance to environmental stress cracking. For example, EP-A-0,291,824, EP-A-0,591,968 and US-A-5,310,834 each disclose mixed catalyst compositions, incorporating chromium-based catalysts, for the polymerisation of polyethylene.

Alternatively, the HDPE can be produced using a conventional Ziegler-Natta catalyst or a supported Ziegler-Natta catalyst comprising metallocene sites such as described in EP-A-0,585,512.

The HDPE can further be polymerised with a metallocene catalyst capable of producing a bi- or multimodal distribution, either in a two step process such as described for example in EP-A-0,881,237, or as a dual or multiple site catalyst in a single reactor such as described for example in EP-A-0,619,325.

The copolymerisation process is carried with ethylene and an alpha-olefinic comonomer comprising from 3 to 10 carbon atoms. Typically, in the copolymerisation process ethylene comonomer comprises 0.5 to 6% by weight and the comonomer comprises from 0.5 to 3% by weight, based on the total weight of the ethylene monomer and comonomer in the inert diluent.

The polyethylene resins produced in accordance with the above-described process have physical properties making them particularly suitable for use as blow moulding grade polyethylenes. In particular, the process can produce polyethylene resins in pellet form having a high load melt index (HMLI) ranging from around 8 to 30 g/10 min and a melt index ($MI_2$) of less than 0.255 g/10 min. Both the high load melt index HMLI and the melt index $MI_2$ were determined during the procedures of ASTM D 1238 using respective loads of 21.6kg and 2.16kg at a temperature of 190°C.

The styrenic polymer used for manufacturing the plastic containers of the present invention can be any styrenic compound having a styrenic content of from 40 to 85 wt%, preferably, from 55 to 80 wt%, and most preferably from 70 to 75 wt%. A typical styrenic compound suitable for use in the present invention, is disclosed for example in U.S. 4,091,053

The styrenic polymer preferably used in the present invention is disclosed in EP-B-0,270,715. It is an improved transparent conjugated diene/monovinyl-substituted aromatic block copolymer. More specifically, it is a transparent linear conjugated diene/monovinyl-substituted aromatic block copolymer having improved impact strength, elongation and flexibility. It is a composition comprising a resinous block copolymer of a conjugated diene and a monovinyl-substituted aromatic having the following structure:

$S_1$-$B_1$-B/S-$S_2$

wherein $S_1$ and $S_2$ are monovinyl-substituted aromatic homopolymer blocks. $B_1$ is a conjugated diene homopolymer block. B/S is a conjugated diene/monovinyl-substituted aromatic random copolymer block.

The block copolymer preferably contains from 5 to 40 wt% of conjugated diene units and from 60 to 95 wt% of monovinyl-substituted aromatic units. The block copolymers are typically prepared by anionic block polymerisation in a solvent medium.

The catalyst is generally an organolithium compound. The amount of organolithium initiator used in the polymerisation process of the present invention depends greatly upon the molecular weight desired for the first segment $S_1$.

The polymerisation is preferably carried out at a temperature of from -20 to 150 °C and at a pressure sufficient to maintain the monomers and the solvents in the liquid phase. The polymerisation is most preferably carried out at a temperature ranging from 20 to 110 °C and at a pressure ranging from atmospheric to 5 bars.

When the polymerisation is complete, a quantity of di-tert-butylhydroxy toluene (BHT), water, methanol or isopropanol, sufficient to inactivate the living chains, is added to the reaction medium and, if required, an antioxidant is also added.

The blow moulding machine, incorporating a coextrusion die for extruding a parison to be blow moulded, can be any one of the machines generally used for blow moulding, for example a Battenfeld Fisher VK1-4 available from Battenfeld etc.

Typically, the HDPE is processed at a temperature ranging from 170 °C to 220°C, preferably at a temperature ranging from 180 °C to 200 °C and most preferably around 190 °C. The S-B-S is preferably processed at a temperature of about 220 °C. The blow mould temperature ranges from 5 °C to room temperature (25 °C).

The plastic containers of the present invention are characterised by a very high gloss, a pleasant "non greasy" touch and an excellent scratch resistance. They have a good drop resistance and labels have a better adhesion to their surface than they do on plastic containers having an HDPE outer surface.

The gloss as measured using the ASTM D 2457-97 test was superior to 40 and references to the gloss are measured in accordance with that test.

The scratch resistance is measured using the norm ISO 1518 that measures the detection of scratches when a point is applied to the surface of the plastic containers with forces of varying strength. None of the plastic containers of the present invention have shown signs of scratch when a 3 Newton force was applied to their surface.

The peel strength or stripping strength of adhesive bonds is measured using the ASTM D 903-49 standard test method. According to that test, the plastic containers of the present invention require a force larger than 5 Newtons to remove a 25 mm wide label.

The drop resistance test is performed on 1 litre bottles prepared in accordance with the present invention. The drop resistance is measured using the following procedure:

A. Preparation of the equipment and bottles:

- the die and pin of the blow moulding equipment was cleaned on the day of production of the bottles;
- the bottles had a fairly homogeneous thickness;
- the net weight of bottles was 0.8 kg
- the empty bottles were stored at room temperature for about 20 hrs;
- the bottles were then filled with fluid, closed and brought to the desired conditioning as follows:

    1) room temperature, water, 24 +- 3 hrs;
    2) -18 °C, water + anti-freeze, 24 +- 3 hrs;

B. A test run on a sample of 20 bottles included the following steps:

- definition of the zero height;
- selection of a starting height for the drop test;
- selection of a homogeneous step distance in order to ensure the use of at least three different heights for each bottle tested;
- rejection of the test if the impact was equivocal or if the cap was leaky;
- recording of the result in a grid shown in Table I;
- modification of the height by subtracting or adding one step distance depending upon whether the bottle broke or not;
- after 14 bottles were tested,

    1) the test was interrupted if the number of ruptures N=7;
    2) the test was continued until N=7, if N was <7;
    3) the test was continued until the number of non-ruptures is 7, if N was >7

- the calculation of the height of rupture $H_F$ was then given by the formula

$$H_F = H_0 + [\Delta H (A/N - 0.5)]$$

wherein
- $H_0$ is the minimum height,
- $\Delta H$ is the step distance,
- A is given by the product $i \cdot n_i$ wherein $n_i$ represents the number of ruptures at each height considering only the last 7 ruptures and i is an integer 0,1,2 ..indicating the number of steps above the minimum height $H_0$,
- N is the total number of ruptures.

The results of the test are summarised in Table I.

## Table I.

| H(m) | | $n_i$ | $i$ | $i. n_i$ |
|---|---|---|---|---|
| 4.4 | X | 1 | 3 | 3 |
| 4.2 | 0　x　x　x　　　　x | 4 | 2 | 8 |
| 4.0 | X　0　　0　0　x　x　0　x | 4 | 1 | 4 |
| 3.8 | X　0　　　　　0　0　　0 | 1 | 0 | 0 |
| 3.6 | 0 | | | |

### Example.

The HDPE used in the production of the internal layer of bottles made according to the present invention was obtained with the chromium catalyst disclosed in EP-A-0,857,736 as follows. A liquid comprising ethylene, 1-hexene and the balance isobutane as an inert diluent was fed into a polymerisation reaction zone at a pressure of 42 bars and at a polymerisation temperature of around 102 to 103 °C. Hydrogen was also fed into the polymerisation reaction zone. Triethyl boron (TEB) was also supplied to the polymerisation reaction zone in the isobutane. The catalyst system comprised the chromium-based catalyst having the following properties: a support of $SiO_2$ and $Al_2O_3$ having around 2.1wt% Al, a pore volume of 2.7cc/g and a specific surface area of 360 $m^2$/g. The catalyst had been subjected to an activation in air to temperature of around 650 °C.

The HDPE was characterised by a density of 0.957 $g/cm^3$, by a high load melt index (HLMI) of 17 g/10 mn, as defined by ASTM-D-1238 and by a molecular weight distribution (D) of 15. It was processed at a temperature of 190 °C.

The S-B-S block copolymer used in the production of the external layer of the bottles made according to the present invention was obtained using the procedure disclosed in EP-B-0,270,715. In accordance with that process, the following quantities, calculated per 100 parts by weight of styrene and 1,3-butadiene monomers were introduced into a pressurised reactor. Thus 471 parts of a solvent mixture consisting of 85 % of cyclohexane and 15 % of n-hexane were first introduced. Tetrahydrofuran (THF) at a rate of 0.07 phr and the styrene monomer at a rate of 16.7 phr were then introduced. The temperature of the reaction medium was then raised to 65 °C and n-butyllithium in the form of a 20 % solution in cyclohexane was injected so as to have 0.083 phr in the medium. The block $S_1$ thus polymerised had a molecular weight of 14,000.

The block polymerisation was then continued by injecting simultaneously 25 parts of 1,3-butadiene and 58.3 parts of styrene, so as to form a butadiene homopolymer block $B_1$ with a molecular weight of 6,800 and a random copolymer block B/S with a molecular weight of 53,200.

The remaining styrene monomer polymerised and formed a homopolymer end block $S_2$ with a molecular weight of 40,000.

The living polymer thus formed was inactivated by adding 0.3 phr of di-tert-butylhydroxy toluene (BHT).

The molecular weight of the final polymer was 114,000.

The polymer was recovered by removing the solvent.

It was characterised by a styrenic content of 75 wt% and was processed at a temperature of 220 °C.

The machine used for coextruding and blow moulding 1 litre, 2 layer bottles with the HDPE as the inner layer and the S-B-S block copolymer as the external layer was a Battenfeld Fisher VK1-4.

The mould was kept at a temperature of 15 °C.

The gloss, scratch resistance and adhesion of labels were then measured on the external layers of the bottles of the present invention in accordance with the above-specified tests. The drop resistance of the bottles was also measured in accordance with the above-specified test. These results were compared with measurements performed under identical conditions on bottles prepared as follows:

Bottle A - HDPE alone
Bottle B - S-B-S mixed with High Impact Polystyrene (HIPS)
Bottle C - S-B-S mixed with polystyrene.

Table II summarises all these measurements.

Table II.

| External layer | HDPE Bottle A | S-B-S | S-B-S+HIPS Bottle B | S-B-S+PS Bottle C |
|---|---|---|---|---|
| Gloss | 4.7 | 44.5 | 55.9 | 53.8 |
| Scratch test | Scratch with 3N force | No scratch with 3N force | No scratch with 3N force | Scratch with 3N force |
| Adhesion test | 2 | 5.5 | 9 | 8.5 |
| Drop test | 6.5 | 6.5 | 3 | 1.1 |

It can be seen that a good balance of properties was obtained with the bottles that have an external layer containing styrene, either S-B-S or S-B-S + HIPS. The best balance of properties was achieved with the S-B-S block copolymer. The pure HDPE bottles had a good drop resistance but a poor gloss, no scratch resistance and poor adhesion of labels. The bottles with an external layer of S-B-S + PS had an excellent gloss and a good adhesion of labels but no scratch resistance and very poor drop resistance.

**Claims**

1.  A plastic container comprising an internal layer including a polyolefin and an external layer including a styrenic component containing from 40 to 85 wt% of styrene based on the weight of the external layer.

2.  A plastic container according to claim 1, wherein the polyolefin is a high density polyethylene having a density of from 0.95 to 0.97g/cm$^3$.

3.  A plastic container according to claim 1 or claim 2, wherein the styrenic component includes a copolymer of styrene and butadiene.

4.  A plastic container according to claim 3, wherein the copolymer is a styrene-butadiene-styrene block copolymer.

5.  A plastic container according to claim 3 or claim 4 wherein the styrenic component further includes polystyrene physically blended with the copolymer.

6.  A plastic container according to any foregoing claim wherein the styrenic component contains from 70 to 75 wt% of styrene based on the weight of the external layer.

7.  A plastic container according to any foregoing claim wherein the external layer has a thickness of from 5 to 10% of the total wall thickness of the container.

8.  A plastic container according to any foregoing claim which is blow moulded.

9.  A plastic container according to any foregoing claim wherein the external layer has a gloss of at least 40.

10. A plastic container according to any foregoing claim wherein the container external layer has a peel strength of at least 5N for removing a 25mm side label in accordance with the peel test of ASTM D 903-49.

11. A process for producing a plastic container, comprising the steps of coextruding a parison comprising an internal layer including a polyolefin and an external layer including a styrenic component which contains from 40 to 85 wt% of styrene based on the weight of the external layer, and blow moulding the parison to form a container.

**European Patent Office**

# EUROPEAN SEARCH REPORT

Application Number

EP 00 20 1155

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 707 955 A (GRACE W R & CO) 24 April 1996 (1996-04-24) * example 3 * | 1,3,4,6 | B65D1/02 B32B27/32 |
| A | US 4 111 349 A (BUCKLER ERNEST JACK ET AL) 5 September 1978 (1978-09-05) * column 2, line 19 - column 3, line 14 * * column 5, line 62 - line 64 * | 1,3,5 | |
| A | DATABASE WPI Derwent Publications Ltd., London, GB; AN 1993-096654 XP002146360 & JP 05 038787 A (TOYO SEIKAN KAISHA), 19 February 1993 (1993-02-19) * abstract * | 1,3,9 | |
| A | PATENT ABSTRACTS OF JAPAN vol. 1999, no. 04, 30 April 1999 (1999-04-30) & JP 11 005275 A (MITSUBISHI CHEM CORP;YOSHINO KOGYOSHO CO LTD), 12 January 1999 (1999-01-12) * abstract * | 1,3,4,8, 11 | |

TECHNICAL FIELDS SEARCHED (Int.Cl.7)

B65D
B32B

The present search report has been drawn up for all claims

| Place of search | Date of completion of the search | Examiner |
|---|---|---|
| THE HAGUE | 1 September 2000 | Bridault, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 00 20 1155

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2000

| Patent document cited in search report | | Publication date | Patent family member(s) | | Publication date |
|---|---|---|---|---|---|
| EP 0707955 | A | 24-04-1996 | AU | 705748 B | 03-06-1999 |
| | | | AU | 3429895 A | 02-05-1996 |
| | | | BR | 9504480 A | 20-05-1997 |
| | | | CA | 2160441 A | 20-04-1996 |
| | | | JP | 8224837 A | 03-09-1996 |
| | | | NZ | 280207 A | 22-09-1997 |
| | | | ZA | 9508682 A | 22-05-1996 |
| US 4111349 | A | 05-09-1978 | CA | 1069814 A | 15-01-1980 |
| | | | BE | 847432 A | 19-04-1977 |
| | | | DE | 2647861 A | 05-05-1977 |
| | | | FR | 2328570 A | 20-05-1977 |
| | | | GB | 1521569 A | 16-08-1978 |
| | | | IT | 1070312 B | 29-03-1985 |
| | | | JP | 1261230 C | 25-04-1985 |
| | | | JP | 52051478 A | 25-04-1977 |
| | | | JP | 59038901 B | 19-09-1984 |
| | | | NL | 7611483 A,B, | 26-04-1977 |
| | | | SE | 434818 B | 20-08-1984 |
| | | | SE | 7611547 A | 23-04-1977 |
| JP 5038787 | A | 19-02-1993 | NONE | | |
| JP 11005275 | A | 12-01-1999 | NONE | | |

EPO FORM P0459

For more details about this annex : see Official Journal of the European Patent Office, No. 12/82